# EUROPEAN PATENT SPECIFICATION

(11) **EP 2 014 750 B1**
(45) Date of publication and mention of the grant of the patent: **08.08.2012**
(21) Application number: 07011581.1
(22) Date of filing: 13.06.2007
(51) Int. Cl.: C10M 145/16, C08F 222/12

(54) **High viscosity lubricant copolymers**
Schmiermittelcopolymere mit hoher Viskosität
Copolymères de lubrifiant à haute viscosité

(43) Date of publication of application: 14.01.2009
(73) Proprietor: Italmatch Chemicals S.P.A., 16149 Genova (IT)
(72) Inventor: Wallfahrer, Uwe, 52372 Kreuzau (DE); Soldavini, Lorenzo, 21013 Gallarate (VA) (IT)
(74) Representative: Trupiano, Federica

(56) References cited:
- EP-A1- 0 429 123
- EP-A1- 0 922 714
- EP-A2- 0 075 217
- EP-B1- 0 690 901

## Description

The invention pertains to a process for the preparation of a copolymer suitable for the use in or as a lubricant, which copolymer is consisting of an α-olefin and a di-ester of an α,β ethylenically unsaturated dicarboxylic acid. More particularly, it is described a high molecular weight lubricating oil base fluid or additive comprising a copolymer of α-olefins with chain lengths for example from 12 to 18 carbon atoms and a di-ester of an α,β ethylenically unsaturated dicarboxylic acid, for example fumaric acid diester, with a C₃-C₇ alkylic alcohol, for example n-butanol, as esterifying component which is compatible with other low polar lubricating oil base fluids.

Copolymers consisting of α-olefins and a di-ester of an α,β ethylenically unsaturated dicarboxylic acid are known, particularly in the field of lubricants. Thus, copolymers as indicated above are disclosed in US 2,543,964 (Giammaria**)** as pour point depressing additives for lubricating mineral oils. Giammaria employs α-olefins having from 8 to 18 carbon atoms and maleic or fumaric di-esters of C₁₂ alcohol, C₁₄ alcohol and mixtures of C₁₀ to C₁₈ alcohols.

Copolymers within the above class are also disclosed in EP 75217 (Beck**).** The esters are preferrably di-esters of maleic or fumaric acid, the esterifying alcohols being linear or branched and having chain lengths from 3 to 10 carbon atoms. The disclosed copolymers are suitable as lubricants or lubricating oil additives, and characteristically have low pour points, average molecular weights from 1300 to 3250, and viscosities at 100°C of maximally about 80 mm²/s.

JP157687/1980 (Mitsubishi**)** generally discloses copolymers of the above type, employing maleic and fumaric esters of alcohols with chain lengths varied within the range of C₁ to C₁₈, preferably C₁ to C₈, and α-olefins having from 4 to 60 carbon atoms.

Also US4, 526,950 (Grava**)** provides a disclosure of a general nature regarding the above type of copolymers. Described are interpolymers of α-olefins having at least about 6 carbon atoms and unsaturated carboxylic acids or derivatives thereof. Acids mentioned are maleic or fumaric acid. As an acid derivative maleic anhydride, which is the comonomer of preferred choice, is specifically referred to.

US 2,615,845 (Lippincott**)** discloses lubricating oil additives which may be copolymers of α-olefins having from 2 to 18 carbon atoms and α,β ethylenically unsaturated carboxylic acids and their derivatives, notably anhydrides (e.g. maleic anhydride). The copolymers may be modified, e.g. by esterification. Suitable esterifying alcohols are said to range from ethanol to octadecanol. In particular, Lippincott teaches esterificaion with a mixture of C₁₂ to C₁₄ alcohols.

US 3,314,908 (Kagan**)** discloses specific copolymers of C₄ to C₉ α-olefins and fumaric di-esters wherein two different esterifying alcohols are present either as mixed esters or as a mixture of single alcohol di-esters, one alcohol having a chain length of C₁₋₃ and the other of C₄₋₉. The Kagan copolymers are tough flexible solids which serve as a paint vehicle.

In EP 296 714 lubricating oil flow improvers are disclosed which may be copolymers of unsaturated dicarboxy esters with e.g. α-olefins. In the case of α-olefins being used, maleic anhydride is explicitly preferred as the dicarboxylic monomer. It is also disclosed to esterify the carboxyl groups, either before or after copolymerization, with C₁ to C₂₀ alcohols. Preferred are C₈ to C₁₈ aliphatic alcohols. Suitable α-olefins are said to contain between about 6 and 46 carbon atoms.

In EP 365 081 a two-cycle engine oil composition is disclosed in which a copolymer of the above category is employed. Preferred are α-olefins having 6 to 18 carbon atoms and esters of maleic or fumaric esters. Preferred esterifying alcohols have 3 to 8 carbon atoms.

In EP 429 123 (Wallfahrer**)** compositions from α,β-unsaturated dicarboxylic acid esters and olefinically unsaturated compounds are disclosed. The compositions are suitable for the use as lubricants and lubricating oil additives and comprise a substantial amount of an intermediate molecular weight reaction product which is neither the lower molecular weight alkenyl or alkyl succinic reaction product, nor the copolymer of the olefin and the ester. While the cited prior art thus comprises viable lubricants and lubricating oil additives, the disclosed copolymers fall short when it comes to satisfying the demands that are the object of the present invention.

There is a need to provide affordable, liquid, high viscous but shear stable lubricating oil base fluids or additives that are compatible with unpolar, low viscous base oils like low viscosity polyalphaolefins (PAOs), hydrotreated base stocks, poly-isobutenes and the like, which are used to formulate for example high demanding, synthetic or semi-synthetic automotive and industrial gear oils and greases. The high viscosity of the said lubricating oil base fluids or additives is necessary to boost the viscosity of those unpolar, low viscous base oils. Furthermore, at least some of these high viscous lubricating oil base fluids or additives should be safe for the use in lubricants with incidental food contact, as a considerable part of industrial lubricants is used in the food processing and food packaging industry.

For the copolymers of the above identified class, these demands appear incompatible, either lacking a sufficiently high viscosity or the required compatibility with unpolar base oils.

State of the art is the use of high viscosity polyalphaolefins (e.g. PAO 40 or PAO 100) as viscosity boosters or thickeners for the mentioned unpolar, low viscous base oils. These high viscosity PAOs fulfill most of the industry requirements, however have a limited thickening power and are expensive to use.

EP 690 901 (Wallfahrer**)** claims copolymers of α-olefins having 8 to 18 carbon atoms and fumaric di-esters having an aliphatic branched or straight chain alcohol as the esterifying component, the alcohol chain lengths being C₈ to C₁₀ or iso-C₁₃. Alcohol chain lengths shorter than C₈ as esterifying component were shown as being not in accordance with EP 690 901, as copolymers based on these fumaric di-esters were found to be not compatible with unpolar base oils.

The claimed copolymers of EP 690 901 are of high viscosity and are compatible with low polar base oils and can principally be used as a replacement for high viscosity PAOs. However, the used fumarate ester raw materials are expensive or not commercially available at all, making these copolymers, if at all, only slightly cheaper to produce than high viscosity PAO's. Furthermore the claimed copolymers are not approved by FDA for the use in lubricants with incidental food contact.

All mentioned industry demands are now satisfied by virtue of the present invention. To this end lubricants or lubricant additives are provided comprising a copolymer within the general class indicated in the opening paragraph, on the basis of α-olefins having from 12 to 18 carbon atoms and a di-ester of an α,β ethylenically unsaturated dicarboxylic acid. More particularly, said α,β ethylenically unsaturated dicarboxylic acid is selected among fumaric acid, maleic acid, which is esterified with a C₃-C₇, more preferably C₃-C₆ linear or branched alkylic alcohol. Always according to the invention, said alcohol is selected as linear or branched C₄ alkylic alcohols, particularly n-butanol.

Said α-olefins having from 12 to 18 carbon atoms are advantageously reacted with fumaric di-ester having n-butanol as the esterifying component, the resulting copolymer having a weight average molecular weight well above 3500, particularly above 5000.

These copolymers display desirable properties, including a viscosity at 100°C of 300 mm²/s or more and a good compatibility with unpolar base oils like low viscosity PAOs. Furthermore the dibutylfumarate raw material is cheap and widely commercially available, and copolymers of this general class based on dibutylfumarate are approved by FDA as components for the use in lubricating oils with incidental food contact. They are liquid at room temperature and despite their quite high viscosities have relatively low pour points. Furthermore, the average molecular weights, though well above 5000, are relatively low with respect to the high viscosities. This renders the copolymers shear stable.

The copolymers can be used as shear stable, multi purpose additives in lubricating oils, acting as a thickener but also as an anti-wear additive and friction modifier. The instant copolymers are particularly useful as an adjuvant in synthetic or semi-synthetic gear oils.

A description of the various embodiments of the invention is given below.

The α-olefins may be selected from linear or branched α-olefins having from 12 to 18 carbon atoms. Shorter and longer α-olefins are not very suitable as they generally yield copolymers that are not sufficiently compatible with unpolar base oils such as low viscosity PAOs.

Suitable examples of α-olefins are 1-dodecene, 1-tetradecene, 1-hexadecene, 1-octadecene. Mixtures of linear and/or branched α-olefins can also be employed. Further, it should be noted that commercially available olefins are generally mixtures characterized by a predominant olefin species and a predominant or average carbon number content. Such commercially available mixtures comprising in substantial part α-olefins with minor amounts of internal olefins and vinylidene compounds are particularly preferred, as they will lead to copolymers having the highest viscosities while maintaining good compatibility with unpolar base oils. Most preferred are C₁₄ to C₁₆ α-olefins.

It is preferred that the α,β ethylenically unsaturated dicarboxylic di-ester selected be a fumaric ester. This is a deviation from the trend in the art, where either maleic or fumaric di-esters are recognized as being equally viable, or maleic acid esters are preferred.

A quintessential aspect of the present invention is the selection of a C₃-C₇, more preferably C₃-C₆ linear or branched alkylic alcohol, particularly, the most suitable alcohol is a linear or branched C₄ alkylic alcohol, particularly n-butanol as the esterifying alcohol component. It was discovered that, in contrast to the comparative examples as reported in EP 690 901, copolymers of high viscosity and good compatibility with unpolar base oils can be obtained using dibutylfumarate as comonomer, when applying special polymerization conditions as will be further specified below.

The monomer starting ratio of α-olefin to C₄ alkylic alcohol di-ester, particularly dibutylfumarate, is generally within the range of 4:1 to about 1:2, and preferably between 3:1 and 1:1.

It is a further requirement that the copolymers have a weight average molecular weight above 3500, most preferred are those having a weight average molecular weight above 5000. For example, it is for that reason among others that the copolymers disclosed in EP 75217 are unsuitable for meeting the demands underlying the present invention.

The invention pertains to a process which was found to be particularly suitable for preparing the copolymers having the unexpected and desirable combination of properties outlined herein before.

The process according to the present invention comprises reacting the α-olefin and the alcohol di-ester under the following conditions:
- Applying a polymerization temperature below 100°C, preferably between 85°C and 95°C;
- employing a radical initiator, such as, for example, a peroxide, displaying favourable decomposition in the above temperature range;
- dosing both the initiator and the fumaric dibutylester to the α-olefin within a period of time comprised between 4 and 10 hours,
preferably between 5 and 7 hours, best preferred at least six hours. It should be noted that a process for the preparation of a copolymer of an α-olefin having from 8 to 18 carbon atoms and a fumaric di-ester is known from e.g. the aforementioned EP 690 901 disclosure. However, EP 690 901 generally employs higher polymerization temperatures than thoseaccording to the process of the invention.

The aforementioned process details of the invention - for example applying a lower polymerization temperature and dosing of the fumarate ester over at least 6 hours to the α-olefin - lead to structurally novel copolymers in a way, that the ester comonomer is very evenly distributed within the copolymer chain, avoiding any accumulation of fumarate moieties ("polar spots") which would render the copolymer chain incompatible with low polar base oils. Is it due to these specific process conditions that a per se quite polar monomer like dibutylfumarate can be incorporated into a copolymer of said high viscosity and still be compatible with unpolar fluids like low viscosity PAOs.

As indicated above, the copolymers are suitable as lubricants. That is, they possess sufficient lubricating properties for use as a lubricating oil base fluid or additive. As base fluids they are particularly suitable for the use in automotive and industrial lubricant applications.

More importantly, however, the copolymers provide lubricating oil additives that are compatible with unpolar base oils such as polyalphaolefins (PAOs), e.g. PAO 4, PAO 6 and PAO 8, which are particularly used in engine oils and gear oils; hydro-treated base stocks which are also used in four-stroke engine oils; and polyisobutenes (used e.g. in two-stroke engine oils) and the like. They are compatible with these unpolar base oils over a wide temperature range: even at temperatures as low as -18°C the copolymers are compatible with low viscosity PAOs at substantially every weight ratio (the lower the temperature, the more compatibility problems are usually to be expected). The high viscosity is advantageous in that the viscosity of the unpolar base oils can be boosted without adversely affecting the low temperature viscosimetrics. In this respect it is preferred that the copolymers have a low pour point.

A typical lubricating oil comprises a low polar base oil and an amount of 1 to 70 wt%, preferably 5 to 50 wt% of a lubricating oil additive as herein defined. Other additives to enhance the lubricity and stability of the lubricant may be present as well.

The copolymers have viscosities at 100°C of more than 300 mm²/s and in preferred cases of 500 mm²/s and higher.

A typical copolymer has a weight average molecular weight above approximately 5000, the α-olefin has 12 to 18 carbon atoms and the esterifying component is n-butanol.

The invention will be further illustrated with reference to the following examples.

### Example 1

**Material 1:** In a 3-litre reaction flask equipped with a stirrer, a thermocouple, a reflux cooler, a nitrogen inlet, and a heating mantle, 1180g of C14 alpha-olephins are heated up to 94°C. 915g of Dibutyl Maleate and 55g of Trigonox 42S are dosed over 6 hours keeping the reacting mixture at a constant temperature of 94°C. At the end of the feeding process, the reacting system is kept at 94°C for 3 hours and 130°C for 1 hour. Then, after having substituted the reflux cooler with a distillation equipment system (claisen, condensing flask, vacuum pump), all volatiles are stripped away under reduced pressure.

### Example 2

**Material 2:** In a 5-litre reaction flask equipped with a stirrer, a thermocouple, a reflux cooler, a nitrogen inlet, and a heating mantle, 1845g of C14-16 alpha-olephins are heated up to 94°C. 1368g of Dibutyl Maleate and 83g of Trigonox 42S are dosed over 6 hours keeping the reacting mixture at a constant temperature of 94°C. At the end of the feeding process, the reacting system is kept at 94°C for 3 hours and 130°C for 1 hour. Then, after having substituted the reflux cooler with a distillation equipment system (claisen, condensing flask, vacuum pump), the unreacted monomers (920g) are stripped away with a vacuum (8mmHg) distillation process which ends when the temperature of the material reach 240°C.

### Example 3

**Material 3:** In a 5-litre reaction flask equipped with a stirrer, a thermocouple, a reflux cooler, a nitrogen inlet, and a heating mantle, 2153g of C14-16 alpha-olephins are heated up to 94°C. 1598g of Dibutyl Fumarate and 97g of Trigonox 42S are dosed over 6 hours keeping the reacting mixture at a constant temperature of 94°C. At the end of the feeding process, the reacting system is kept at 94°C for 3 hours and 130°C for 1 hour. Then, after having substituted the reflux cooler with a distillation equipment system (claisen, condensing flask, vacuum pump), the unreacted monomers (1036g) are stripped away with a vacuum (8mmHg) distillation process which ends when the temperature of the material reach 240°C.

### Example 4

**Material 4:** In a 3-litre reaction flask equipped with a stirrer, a thermocouple, a reflux cooler, a nitrogen inlet, and a heating mantle, 615g of C14-16 alpha-olephins are heated up to 94°C. 457g of Diisobutyl Fumarate and 28g of Trigonox 42S are dosed over 6 hours keeping the reacting mixture at a constant temperature of 94°C. At the end of the feeding process, the reacting system is kept at 94°C for 3 hours and 130°C for 1 hour. Then, after having substituted the reflux cooler with a distillation equipment system (claisen, condensing flask, vacuum pump), the unreacted monomers (306g) are stripped away with a vacuum (8mmHg) distillation process which ends when the temperature of the material reach 240°C.

### Example 5

The 4 sample materials present the following chemical characterization and compatibility results

| **n^{a}** | **Acid Value** | **Flash** | **Viscosity at** | **Compatibility** |
|---|---|---|---|---|
| | **(mgKOH/g)** | **point (°C)** | **100°C (cSt)** | **PAO4/PAO6/PAO8** |
| 1 | 0.09 | 275 | 610 | OK |
| 2 | 0.1 | 270 | 110 | OK |
| 3 | 0.05 | 270 | 510 | OK |
| 4 | 0.12 | 270 | 1340 | OK |

## Claims

1. A process for the preparation of a copolymer of an α-olefin having from 12 to 18 carbon atoms and a di-ester of an α,ß ethylenically unsaturated dicarboxylic acid where , a C₃-C₇ linear or branched alkylic alcohol is the esterifying component for the dicarboxylic acid and where the copolymer has a weight average molecular weight above 3500, comprising the following steps:
• reacting said α-olefln with said di-ester of an α,ß ethylenically unsaturated dicarboxylic acid under the influence of a peroxide radical initiator while applying a temperature below 100°C,
• employing a radical initiator displaying favourable decomposition in the above temperature range;
• dosing both the initiator and the di-ester of an α,ß ethylenically unsaturated dicarboxylic acid to the α-olefin within a period of time comprised between 4 and 10 hours.

2. Process according to claim 1, **characterized in that** said temperature is comprised between 85°C and 95°C.

3. Process according to claim 1, **characterized in that** said period of time is at least six hours.

4. Process according to claim 1, **characterized in that** said C₄ linear or branched alkylic alcohol is n-butanol.

5. A process according to claim 1, **characterized in that** said initiator is a peroxide and it is selected as t-butylperoxy-3,5,5-trimethylhexanoate.

## Patentansprüche

1. Verfahren zur Herstellung eines Copolymers aus einem α-Olefin mit 12 bis 18 Kohlenstoffatomen und einem Diester einer α,β-ethylenisch ungesättigten Dicarbonsäure, wobei ein linearer oder verzweigter alkylischer C₃-C₇-Alkohol die veresternde Komponente für die Dicarbonsäure ist und wobei das Copolymer ein mittleres Molekulargewicht oberhalb von 3500 aufweist, umfassend die folgenden Schritte:
• Reagieren des α-Olefins mit dem Diester einer α,β-ethylenisch ungesättigten Dicarbonsäure unter der Einwirkung eines Peroxid-Radikalstarters, während eine Temperatur unterhalb von 100 °C zur Anwendung kommt;
• Einsatz eines Radikalstarters, welcher eine bevorzugte Zersetzung im oben genannten Temperaturbereich zeigt;
• Dosieren sowohl des Starters als auch des Diesters einer α,β-ethylenisch ungesättigten Dicarbonsäure zu dem α-Olefin innerhalb eines Zeitraums, betragend zwischen 4 und 10 Stunden.

2. Verfahren nach Anspruch 1, **dadurch gekennzeichnet, dass** die Temperatur zwischen 85 °C und 95 °C beträgt.

3. Verfahren nach Anspruch 1, **dadurch gekennzeichnet, dass** der Zeitraum wenigstens sechs Stunden beträgt.

4. Verfahren nach Anspruch 1, **dadurch gekennzeichnet, dass** der lineare oder verzweigte alkylische C₄-Alkohol n-Butanol ist.

5. Verfahren nach Anspruch 1, **dadurch gekennzeichnet, dass** der Starter ein Peroxid ist und ausgewählt ist als t-Butylperoxy-3,5,5-trimethylhexanoat.

## Revendications

1. Procédé pour la préparation d'un copolymère d'une α-oléfine ayant de 12 à 18 atomes de carbone et d'un diester d'un acide dicarboxylique éthyléniquement insaturé en α,β, où un alcool alkylique en C₃ à C₇ linéaire ou ramifié est le composant d'estérification pour l'acide dicarboxylique et où le copolymère a une masse moléculaire moyenne en masse supérieure à 3 500, comprenant les étapes suivantes :
• la réaction de ladite α-oléfine avec ledit diester d'un acide dicarboxylique éthyléniquement insaturé en α,β sous l'influence d'un initiateur radicalaire peroxyde tout en appliquant une température inférieure à 100 °C,
• l'emploi d'un initiateur radicalaire présentant une décomposition favorable dans la plage de températures ci-dessus ;
• le dosage à la fois de l'initiateur et du diester d'un acide dicarboxylique éthyléniquement insaturé en α,β par rapport à l'α-oléfine dans une période comprise entre 4 et 10 heures.

2. Procédé selon la revendication 1, **caractérisé en ce que** ladite température est comprise entre 85 °C et 95 °C.

3. Procédé selon la revendication 1, **caractérisé en ce que** ladite période est au moins six heures.

4. Procédé selon la revendication 1, **caractérisé en ce que** ledit alcool alkylique en C₄ linéaire ou ramifié est le n-butanol.

5. Procédé selon la revendication 1, **caractérisé en ce que** ledit initiateur est un peroxyde et il est choisi sous la forme de t-butylperoxy-3,5,5-triméthylhexanoate.
